# EUROPEAN PATENT SPECIFICATION

(11) **EP 4 054 056 B1**
(45) Date of publication and mention of the grant of the patent: **28.02.2024**
(21) Application number: 22170291.3
(22) Date of filing: 23.01.2020
(51) Int. Cl.: H02J 50/10, H02J 50/60

(54) **ADDRESSING BORDERLINE FOREIGN OBJECT DETECTION RESULTS**
ADRESSIEREN VON GRENZWERTIGEN ERGEBNISSEN DER FREMDKÖRPERERKENNUNG
TRAITEMENT DES RÉSULTATS LIMITES DE DÉTECTION D'OBJET ÉTRANGER

(30) Priority: 23.01.2019 US 201962795617 P; 05.12.2019 US 201916704946
(43) Date of publication of application: 07.09.2022
(62) Divisional of application: 20153265.2
(73) Proprietor: MediaTek Singapore Pte. Ltd., Singapore 138628 (SG)
(72) Inventor: MURATOV, Vladimir, San Jose, 95134 (US)
(74) Representative: Hoefer & Partner Patentanwälte mbB

(56) References cited:
- EP-A1- 3 393 009
- US-A1- 2017 117 756
- US-B2- 10 036 767

## Description

### BACKGROUND

### 1. Technical Field

The techniques described herein relate generally to wireless power delivery, and particularly to detection of foreign objects in the field produced by a wireless power transmitter, termed foreign object detection (FOD).

### 2. Discussion of the Related Art

Wireless Power Transfer Systems (WPTS) are gaining increasing popularity as convenient way to deliver power without wires or connectors. WPTS currently under development in the industry can be separated in two major classes: magnetic induction (MI) systems and magnetic resonance (MR) systems. Both types of systems include a wireless power transmitter and a wireless power receiver. Such systems can be used to power or charge mobile devices such as smartphones or tablet computers, among other applications. Such a mobile device includes a wireless power receiver that can have power transferred thereto wirelessly by a wireless power transmitter. A wireless power transmitter may be within a pad or stand on which the mobile device can be placed, for example, during wireless charging.

Inductive WPTS typically operate in an allocated frequency range of several hundred kilohertz using frequency variation as a power flow control mechanism.

MR WPTS typically operate on a single resonant frequency using input voltage regulation to regulate output power. In typical applications, MR WPTS operate at a frequency of 6.78 MHz.

Several industry committees have been working on developing international standards for consumer products based on wireless power transfer.

US 10036767 B2 discloses a detection apparatus including a resonant circuit provided with a Q-factor measurement coil and one or more capacitors to serve as a circuit for receiving pulses; a response-waveform detecting section configured to detect the waveform of a response output by the resonant circuit in response to the pulses; and a Q-factor measuring section configured to measure a Q factor of the resonant circuit from the response waveform detected by the response-waveform detecting section.

EP 3 393 009 A1 and US 2017/117756 A1 both disclose an apparatus for performing foreign object detection, FOD, in a wireless power transfer system, wherein plurality of FOD measurements are performed and processed to perform FOD.

### SUMMARY

Embodiments of the invention relate to method for a wireless power receiver to control power transfer based on a result of foreign object detection, the method comprising, by the wireless power receiver: receiving, from a wireless power transmitter, a confidence level as to whether a foreign object is present, the confidence level being within a predetermined range; mapping the confidence level to a maximum operating condition; sending the maximum operating condition to the wireless power transmitter; and receiving power from the wireless power transmitter at or below the maximum operating condition.

The confidence level may indicate a foreign object is present, a foreign object is not present, or the FOD measurement is marginal.

The confidence level may be a first confidence level indicating a weak positive detection of a foreign object or a second confidence level indicating a weak negative detection of a foreign object.

The confidence level may be received using one or more messages selected from the group consisting of an ACK and a NAK.

The maximum operating condition may correspond to a maximum power level.

The maximum operating condition may correspond to a power level that is less than 100% and greater than 50% of a prior power level received by the wireless power receiver from the wireless power transmitter before the receiving of the confidence level.

The wireless power receiver may change its operating mode, power, or voltage in response to the confidence level received from the wireless power transmitter.

The wireless power receiver may transition into a lower operating voltage, or power level, or both in response to a low confidence level received from the wireless power transmitter.

The wireless power receiver may change its operating mode, power, or voltage in response to the confidence level received from the wireless power transmitter by performing linear or non-linear correlation of the received confidence level to the operating mode, power, or voltage, the correlation being stored by the wireless power receiver.

Some embodiments of the invention relate to a controller for a wireless power receiver, comprising circuitry configured to: receive, from a wireless power transmitter, a confidence level as to whether a foreign object is present, the confidence level being within a predetermined range; map the confidence level to a maximum operating condition; send the maximum operating condition to the wireless power transmitter; and receive power from the wireless power transmitter at or below the maximum operating condition.

The maximum operating condition may correspond to a maximum power level.

The maximum operating condition may correspond to a power level that is less than 100% and greater than 50% of a prior power level received by the wireless power receiver from the wireless power transmitter before the wireless power receiver receives the confidence level.

The foregoing summary is provided by way of illustration and is not intended to be limiting.

### BRIEF DESCRIPTION OF DRAWINGS

In the drawings, each identical or nearly identical component that is illustrated in various figures is represented by a like reference character. For purposes of clarity, not every component may be labeled in every drawing. The drawings are not necessarily drawn to scale, with emphasis instead being placed on illustrating various aspects of the techniques and devices described herein.
FIG. 1 shows a block diagram of the wireless power system including a wireless power transmitter and a wireless power receiver.
FIG. 2 shows a flowchart illustrating a method for performing foreign object detection, according to some embodiments.
FIG. 3 shows a plot illustrating three cases corresponding to results of the FOD comparison.
FIG. 4 illustrates an example of actions that may be taken in response to a marginal FOD result, according to some embodiments.
FIG. 5 illustrates another example of actions that may be taken in response to a marginal FOD result, according to some embodiments.
FIG. 6 shows a flowchart of a method of foreign object detection in which more than one marginal result may be determined based on the comparison between the FOD measurement and the FOD reference.
FIG. 7 shows a diagram similar to that of FIG. 3 for two marginal detection results. FIG. 8 illustrates a communication technique for communicating between the wireless power transmitter and the wireless power receiver the detection of the four FOD states discussed above in connection with FIG. 6 and FIG. 7.
FIG. 9 shows an example of a time / logic-state diagram for the communication technique of FIG. 8, according to some embodiments.
FIG. 10 illustrates a method of performing foreign object detection including actions by both the wireless power transmitter and the wireless power receiver, according to some embodiments.
FIG. 11 shows a plot illustrating an example of a linear relationship between the FOD parameter and confidence level, termed Foreign Object Presence Probability (FOPP).
FIG. 12 illustrates an example of a non-linear relationship between the FOD parameter and FOPP.
FIG. 13 illustrates another example of a non-linear relationship between the FOD parameter and FOPP.
FIGS. 14A and 14B illustrate detailed examples of a linear correlation between Foreign Object Presence Probability (FOPP) and power loss (FIG. 14A), and Q-factor (FIG. 14B).

### DETAILED DESCRIPTION

Wireless power transfer can be degraded due to the presence of a foreign object in the field produced by the wireless power transmitter. Conductive objects such as metallic objects may absorb power due to the inducement of eddy currents in the conductive object. The presence of such an object can significantly degrade the efficiency of the wireless power transmission. If a metal object is present, efficiency may be reduced substantially (e.g., from 90% to 40%). Further, due to the power absorbed, the temperature of the object may increase significantly, which may be undesirable. Techniques have been developed for sensing the presence of a foreign object by measuring the power loss or by measuring the quality factor (Q-factor). According to such techniques, measuring the Q-factor can be used to determine if a foreign object is present, as the presence of a foreign object reduces the Q-factor of the system, and the presence of high power loss indicates the presence of a foreign object absorbing the power. In the power loss technique, the power transmitted by the wireless power transmitter and received by the wireless power receiver may be measured. The power loss is the difference between the two measurements. If the power loss is outside an acceptable range (above a threshold), a foreign object may be determined to be present, and a foreign object is determined to be absent when the power loss is within an acceptable range. For the Q-factor measurement technique, if the Q-factor is outside of an acceptable range, it may be determined that a foreign object is present, and wireless power transmission may be disabled. On the other hand, if the Q-factor within an acceptable range, it may be determined that no foreign object is present, and wireless power transmission may be allowed. To determine whether the measured Q-factor is within an acceptable range, one technique is for the wireless power receiver to store a reference Q-factor for the wireless power receiver. The reference Q-factor of the wireless power receiver may have been measured with a reference wireless power transmitter. To perform foreign object detection the wireless power receiver may transmit its reference Q-factor to the wireless power transmitter. The wireless power transmitter may compare the reference Q-factor with a measured Q-factor. If the reference and measured Q-factors are sufficiently close to one another (e.g., within a threshold amount) it may be determined that no foreign object is present. However, if the measured Q-factors are not sufficiently close to one another, it may be determined that a foreign object is present. In some embodiments, information other than or in addition to Q-factor may be evaluated. For example, a resonant frequency may be measured and compared to a reference resonant frequency provided by the wireless power receiver. As another example, a figure of merit (FOM) may be calculated based one or more parameters such as one or more of Q-factor, resonant frequency or other information. A measurement FOM may be calculated using measured values and compared to an FOM calculated with the same FOM calculating using reference values. Regardless of the parameters used, a FOD reference may be compared to a FOD measurement result to determine whether a foreign object is present. Whether the measured value is above or below a threshold with respect to the reference value may be used to make a determination as to whether a foreign object is present.

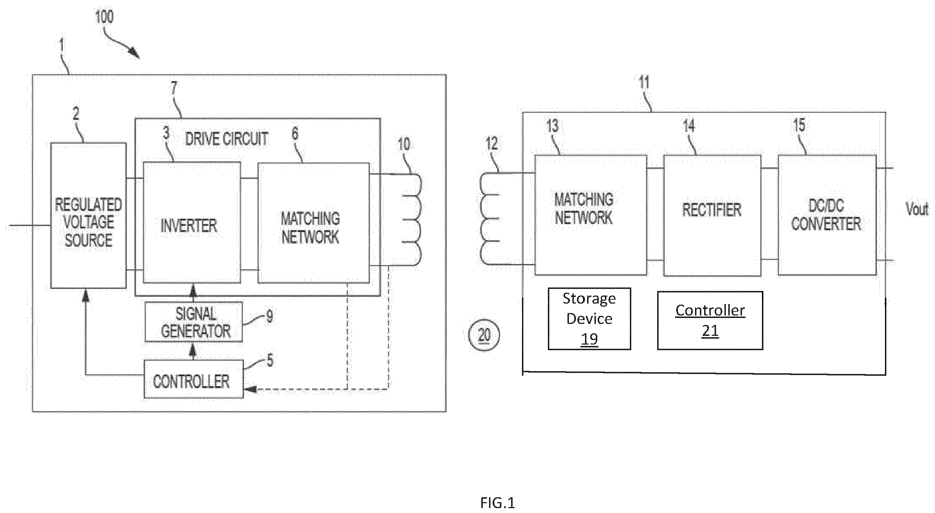

The inventor has recognized and appreciated that there are marginal cases in which the FOD measurement result is close to the threshold value. According to prior techniques, a simple binary determination is used, based on whether the threshold is crossed or not. According to prior techniques, FOD measurement results where the comparison is very slightly above or below the threshold are treated the same as FOD measurement results where the comparison is far from the threshold. The inventor has appreciated that identifying FOD measurement results close to the threshold as low-confidence FOD determinations may be beneficial. For example, in such low-confidence cases further action may be taken in marginal cases further action may be taken to help resolve whether a foreign object is present. For example, one or more additional tests may be performed and/or additional information may be used to assist with the determination as to whether a foreign object is present. Alternatively or additionally, in low-confidence cases the level of power transmitted by the wireless power transmitter may be reduced or limited to a value less than maximum due to the FOD uncertainty. Prior to discussing such techniques an overview of a wireless power transfer system will be discussed with reference to FIG. 1.

FIG. 1 shows a block diagram of the wireless power system 100 including a wireless power transmitter 1 and a wireless power receiver 11. The wireless power transmitter 1 has a drive circuit 7 including an inverter 3 that drives a transmit coil 10 through a matching network 6. The wireless power transmitter 1 may include a regulated voltage source 2 (e.g., a voltage regulator) that provides a regulated DC voltage to the inverter 3. The regulated voltage source 2 produces a regulated DC output voltage in response to control stimulus from the controller 5. In some embodiments, the drive circuit 7 may be a class D or E amplifier that converts the DC voltage at the input of inverter 3 into an AC output voltage to drive the transmit coil 10. Producing an AC output voltage enables wireless power transmission through electromagnetic induction. The controller 5 may control a signal generator 9 to drive the inverter 3 with signals of a selected wireless power transmission frequency. As an example, the inverter 3 may be switched at a frequency between 100 and 205 kHz to transmit power to a wireless power receiver designed to receive wireless power according to the Qi specification for low power Qi receivers and 80-300 kHz for medium power Qi receivers. The inverter 3 may be switched at a higher frequency, such as a frequency of greater than 1 MHz, within an ISM band, e.g., 6.765 MHz to 6.795 MHz, to transmit power to a receiver designed to receive wireless power using MR technology. However, these frequencies are described merely by way of example, as wireless power may be transmitted at a variety of suitable frequencies, in accordance with any suitable specification. Controller 5 may be an analog circuit or a digital circuit. Controller 5 may be programmable, and may command signal generator 9 to produce signals at a desired transmission frequency based on stored program instructions, so that inverter 3 switches at the desired transmission frequency. Matching network 6 may facilitate wireless power delivery by presenting a suitable impedance to the inverter 3. The matching network(s) may have one or more capacitive or inductive elements or any suitable combination of capacitive and inductive elements. Since the transmit coil 10 may have an inductive impedance, in some embodiments the matching network 6 may include one or more capacitive elements, which, when combined with the impedance(s) of the transmit coil 10, presents an impedance to the output of inverter 3 suitable for driving the transmit coil 10. In some embodiments, during wireless power transfer the resonant frequency of the matching network 6 may be set equal to or approximately equal to the switching frequency of the inverter 3. The transmit coil 10 may be realized by any suitable type of conductors. The conductors may be wires, including solid wire or Litz wire, or patterned conductors, such as patterned conductors of a PC board or an integrated circuit.

The AC current in the transmit coil 10 generates an oscillating magnetic field in accordance with Ampere's law. The oscillating magnetic field induces an AC voltage into a receiver coil 12 of the wireless power receiver 11 in accordance with Faraday's law. The AC voltage induced in the receiver coil 12 is provided through a matching network 13 to a rectifier 14 that generates an unregulated DC voltage. Rectifier 14 may be a synchronous rectifier or may be implemented using diodes. The unregulated DC voltage is regulated using a DC/DC converter 15, the output of which may be filtered and provided to a load as output voltage Vout. In some alternate embodiments the DC/DC converter 15 can be replaced by a linear regulator or battery charger, or eliminated altogether. In some embodiments, the wireless power transmitter 1 and/or receiver 11 may have communication circuitry (e.g., within or outside controller 5 and 21) for communicating with wireless power receiver 11 either through in-band communication or out of band communication. Similarly, wireless power receiver 11 may have communication circuitry for communicating with a wireless power transmitter 1. The wireless power receiver 11 may send feedback information to the wireless power transmitter 1 indicating the power demanded at the wireless power receiver 11, or a change in the power level to be provided. In response, the wireless power transmitter 1 may increase or decrease its power output accordingly. The wireless power transmitter 1 may control the amount of power transmitted by varying the voltage drive level, the frequency of the signal transmitted or both. Any suitable power control techniques may be used.

As shown in FIG. 1, if a conductive foreign object 20 enters the field produced by the transmit coil 10 of the wireless power transmitter 1, the wireless power transmission efficiency may be degraded and/or the conductive foreign object 20 may undergo significant heating. Examples of conductive foreign objects 20 include coins, paperclips, and keys, by way of illustration.

In some embodiments, foreign object detection may be performed by energizing and controlling the drive circuit of a wireless power transmitter, and measuring a characteristic of a transient in the wireless power transmitter to measure Q-factor and resonant frequency. Based on the transient characteristic the wireless power transmitter can determine whether a foreign object is present in the field produced by the wireless power transmitter. However, Q-factor and resonant frequency can be measured in any suitable way, and is not limited to measuring a characteristic of a transient. In some embodiments, the Q-factor and/or frequency may be detected by frequency-domain measurements, or a combination of time-domain and frequency-domain measurements.

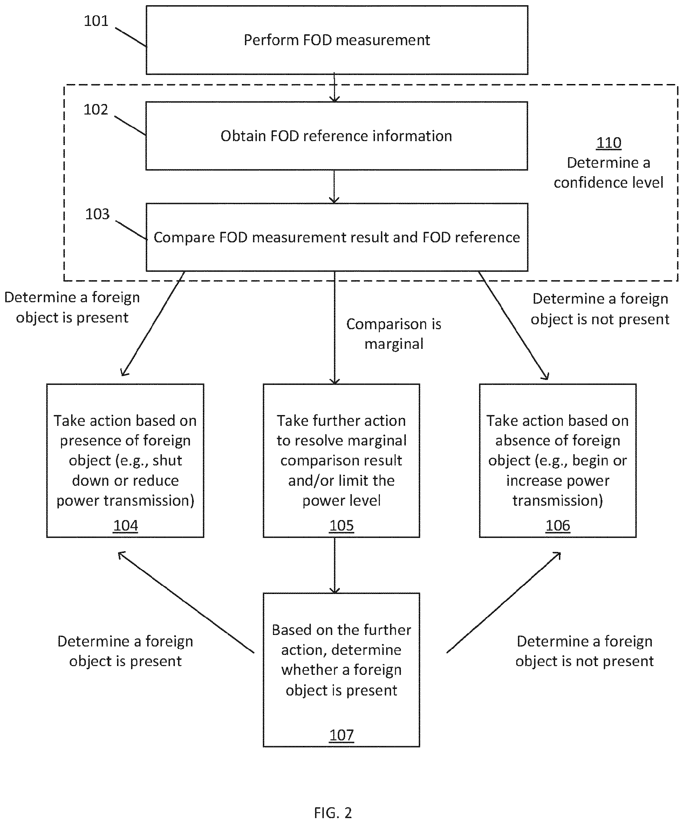

As mentioned above, in some case a foreign object detection (FOD) measurement may be close to the threshold for assessing whether a foreign object is present. Further action can be taken to assist with resolving whether a foreign object is present, as will be discussed in connection with FIG. 2.

FIG. 2 shows a flowchart illustrating a method for performing foreign object detection, according to some embodiments. In step 101 a FOD measurement may be performed. The measurement may be performed before the wireless power receiver is in communication with the wireless power transmitter, although the techniques described herein are not limited in this respect, and in some cases the measurement may be performed after the wireless power transmitter and wireless power receiver are in communication with one another. The FOD measurement may be performed by the wireless power transmitter 100. Any of a variety of measurements may be performed. For example, the Q-factor and/or resonant frequency for wireless power transmission may be measured. The measurement may be made by energizing the transmit coil of the wireless power transmitter with relatively low energy, below the level of energy that would energize the wireless power receiver. The controller of the wireless power transmitter may control such measurements. Any of a variety of suitable of measurement techniques may be used, such as time-domain measurements or frequency domain measurements, for example. Examples of suitable measurements are described in U.S. Published Patent Application 2018/0241257 to Muratov et al. In some embodiments, a figure of merit (FOM) may be calculated based upon one or more FOD measurements, for comparison with a reference (FOM).

If a potential wireless power receiver is detected, the wireless power transmitter may increase the transmit power to attempt to energize the wireless power receiver and initiate communication. If a wireless power receiver is present, communications may then be initiated between the wireless power transmitter and the wireless power receiver. They can then exchange information, and the wireless power receiver provides its reference information so that more fine-grained foreign object detection technique may be performed. In some embodiments, the reference information of the wireless power receiver may have been measured during a calibration process and stored in at least one storage device 19 of the wireless power receiver 11, which may be any suitable type of computer-readable storage such as a memory or register, for example. A variety of types of calibration information may be measured, such as the Q-factor and/or resonant frequency of the wireless power receiver as measured in calibration conditions, for example. The calibration process may be performed by a reference wireless power transmitter having known parameters or by measurement equipment such as an LCR meter. LCR meters usually perform measurements of Q-factor and coil inductance at the same time at fixed frequency. This frequency may differ from the self-oscillating frequency exhibited by the test transmitters, hence measurements of Q-factor may need be normalized to be compared. However, of a variety of techniques may be used for measuring reference information of the wireless power receiver, and the present disclosure is not limited to particular measurement techniques.

In step 110, a confidence level as to whether a foreign object is present may be determined based on the FOD measurement result. In some cases, the confidence level may be determined using FOD reference information in steps 102 and 103.

In step 102, the FOD reference of a wireless power receiver may be received by the wireless power transmitter (e.g., received by the controller through a communication interface of the wireless power transmitter). The FOD reference may be received from the wireless power receiver, for example. Any suitable communication technique may be used to send the information, such as wireless radio communication, for example.

In step 103, the FOD measurement result and FOD reference may be compared. A determination may be made based on the comparison as to whether the FOD measurement result is within a predetermined range. As mentioned above, any suitable comparison may be performed, such as taking the difference or ratio between the FOD measurement result and the FOD reference and determining whether the FOD measurement result and the FOD reference differ by less than a threshold amount. For example, if the comparison indicates the FOD measurement result and the FOD reference are close to one another, it may be determined that no foreign object is present. If it is determined that a foreign object is not present, action may be taken in step 106 consistent with a foreign object being absent. For example, the wireless power transmitter may be allowed to initiate or continue wireless power transfer or allowed to increase the power level of the wireless power transfer. If the comparison indicates that the reference and measurement FOD information are not similar to one another, the comparison may indicate that a foreign object is present. If it is determined that a foreign object is present, the wireless power transmitter may take action consistent with the presence of a foreign object in step 104. For example, the wireless power transmitter may be prevented from initiating or continuing wireless power transfer or controlled to decrease the power level of wireless power transfer. If the comparison between the measurement and reference FOD information indicates a low confidence level of determining whether a foreign object is present, further action may be taken in step 105 consistent with this determination. For example, an additional measurement may be performed to obtain additional information and/or additional information may be obtained and/or considered. Alternatively or additionally, power transmission may be limited or reduced to less than a maximum level based on the uncertainty as to whether a foreign object is present. More specific examples of actions that may be performed in step 105 are discussed below. If additional information is obtained in step 105, in step 107 the additional information may be considered and a determination made as to whether a foreign object is present, and the method may then proceed to step 104 or 106 consistent with the determination. Alternatively, the method may proceed directly from step 105 to a step of allowing power transfer at a level that is less than a maximum level based on the uncertainty as to whether a foreign object is present

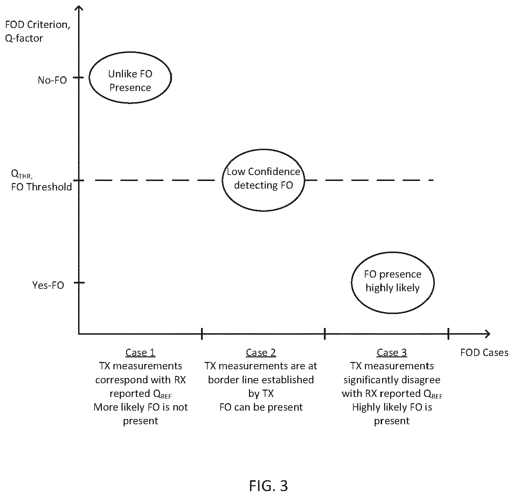

FIG. 3 shows a plot illustrating three cases corresponding to results of the comparison in step 103. An FOD criterion is on the vertical axis with the three cases being in different positions along the horizontal axis. The FOD criterion may be any suitable criterion used as the basis of the comparison between reference and measured values, such as Q-factor, resonant frequency or a figure of merit calculated based on one or more FOD parameters. The threshold for determining whether a foreign object is present according to prior techniques is illustrated in a dashed horizontal line. Taking Q-factor as an example of an FOD criterion, a high Q-factor may indicate that no foreign object is present, whereas a low Q-factor may indicate that a foreign object is present. Case 1 illustrates a case with a high measured Q-factor, which indicates that a foreign object is present. Case 3 illustrates a case with low measured Q-factor, which indicates that a foreign object is not present. Case 2 illustrates a case that is close to the threshold. A measured FOD criterion that is close to the threshold may carry a low level of confidence in its ability to indicate whether a foreign object is present. Accordingly, for marginal cases such as case 2, the method of FIG. 1 may proceed to step 105 to help resolve whether a foreign object is present.

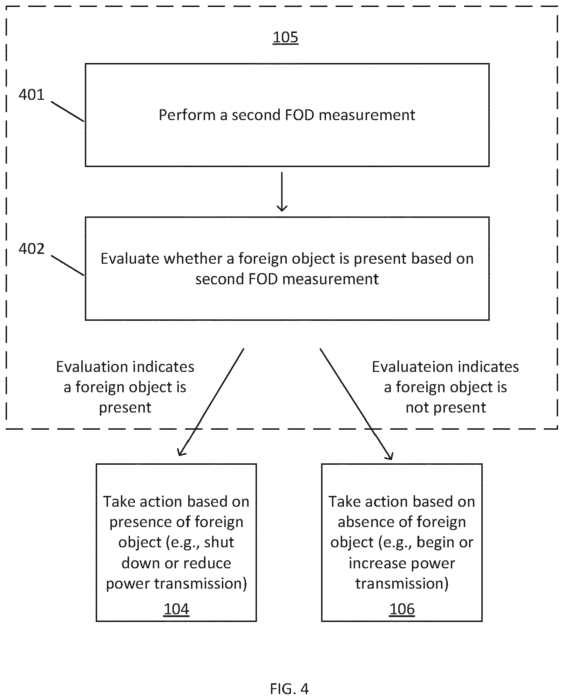

FIG. 4 illustrates an example of actions that may be taken in step 105, according to some embodiments. In step 401, a second FOD measurement may be performed. The second FOD measurement may measure the same parameter that was measured in step 101 or a different parameter.

In some embodiments step 401 may be performed at a lower power level than that at which step 101 was performed. Reducing the power level may enable a more accurate measurement to be performed. The wireless power transmitter 1 may reduce the level of power transmitted in any suitable way, such as by reducing the voltage of the regulated voltage source 2, for example. Any suitable FOD measurement(s) may be made in step 401, such as a Q-factor measurement, and/or a resonant frequency measurement, for example. As one example, Q-factor may be measured in step 101 at a first power level, and then Q-factor may be measured in step 401 at a lower power level. As another example, if a first Q-factor parameter was measured in step 101, a second, different parameter may be measured in step 401. For example, if Q-factor is measured in step 101 the resonant frequency may be measured in step 401, either at the same power level or a different power level (e.g., a lower power level).

The information obtained as a result of step 401 may be used to resolve whether a foreign object is present in step 402. This may be done in a variety of ways. As an example, if a more accurate measurement (e.g., at a lower power level) is performed in step 401 the result of the measurement may be compared with the threshold, and then a determination may be made based on this comparison whether a foreign object is present. As another example, if the information obtained in step 401 is different from that obtained in step 101 (e.g., resonant frequency instead of Q-factor), the new parameter may be compared with a threshold and a determination made on the basis of the comparison.

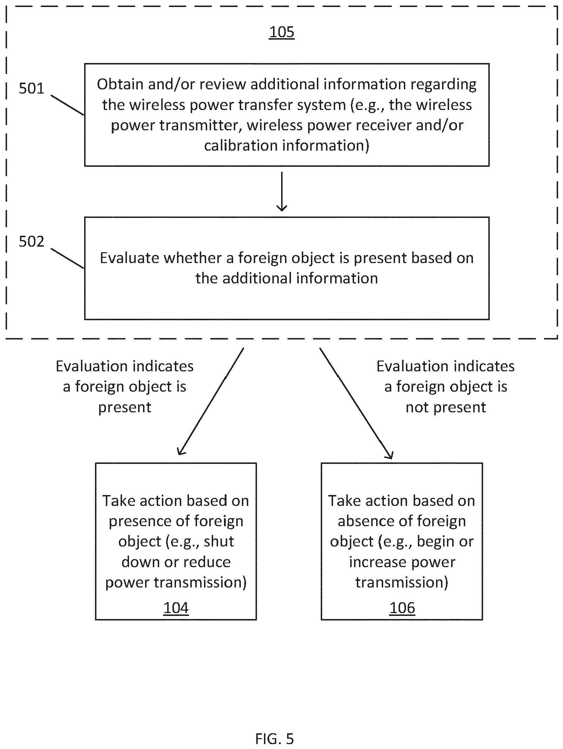

FIG. 5 illustrates another example of actions that may be taken in step 105, according to some embodiments. In step 501, additional FOD information may be obtained and/or reviewed.

For example, the wireless power transmitter may request FOD reference information from the wireless power receiver. For example, the wireless power transmitter may request the reference Q-factor and/or resonant frequency of the wireless power receiver, particularly if such information was not received earlier from the wireless power receiver. In response, the wireless power receiver may provide the requested information to the wireless power transmitter.

As another example, the wireless power transmitter may look up new information stored in memory to perform a more sophisticated FOD comparison. For example, in step 101 a single FOD parameter, such as Q-factor may be used in the comparison. In step 501, an additional parameter may be used, such as resonant frequency. A figure of merit may be calculated based on both FOD parameters. Then, in step 502, a measurement FOM and a reference FOM may be compared in a more sophisticated FOD comparison.

In some embodiments, both additional information, as discussed in connection with FIG. 5 and additional measurements may be used to evaluate whether a foreign object is present. For example, in the context of FIG. 5, if only Q-factor was used in the initial measurement in step 101, in step 501 an additional measurement may be performed, such as a resonant frequency measurement, to obtain suitable additional information for use in evaluating whether a foreign object is present.

The above examples describe instances where a second FOD measurement may be performed in steps 401 or 501. However, the techniques described herein are not limited to two measurements. For example, three or more measurements may be performed in some cases. In some cases, steps 402 or 502 may provide marginal results, and a third level of measurement and/or revaluation may be performed to resolve whether a foreign object is present. In this respect, it should be appreciated that any suitable number of levels of evaluation may be used.

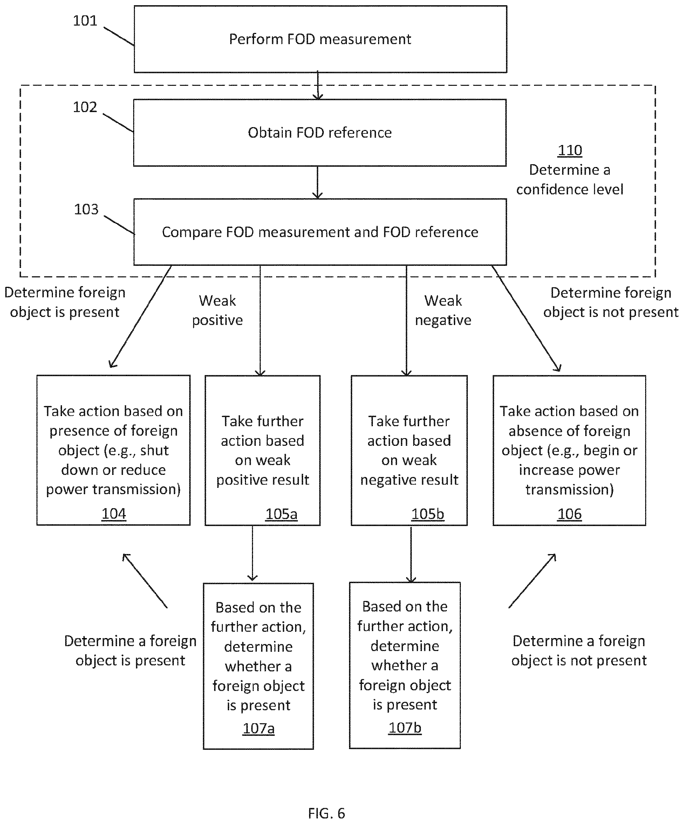

FIG. 6 shows a flowchart of a method of foreign object detection in which more than one marginal result may be determined based on the comparison between the FOD measurement and the FOD reference in step 103. A comparison that is close to the threshold and on the side of the threshold indicating a foreign object is present may be considered to indicate a weak positive detection of a foreign object, and the method proceeds to step 105a. In step 105a further action is taken based on the weak positive result to confirm the presence of a foreign object. Step 105a may include any of the actions discussed above with respect to step 105 for example. The method may then proceed to step 107a. Step 107a may include any of the actions discussed above with respect to step 107. If the presence of a foreign object is confirmed, the method proceeds to step 104. If a foreign object is determined not to be present, the method proceeds to step 106. Similarly, for a comparison that is close to the threshold and on the side of the threshold indicating a foreign object is not present, the comparison may be considered to indicate a weak negative, which is a marginal indication that a foreign object is absent, and the method proceed to step 105b. In step 105b further action is taken based on the weak negative result to confirm the absence of a foreign object. Step 105b may include any of the actions discussed above with respect to step 105 for example. The method may then proceed to step 107b. Step 107b may include any of the actions discussed above with respect to step 107. If the presence of a foreign object is confirmed, the method proceeds to step 104. If a foreign object is determined not to be present, the method proceeds to step 106.

The actions taken in step 105a may be different from the actions taken in step 105b, or they may be the same. Similarly, the determination in step 107a may be different from the determination made in step 107b, or they may be the same. In some embodiments steps 107a and 107b may differ in the logic used to confirm that a foreign object is not present or that a foreign object is present. For example, when a weak positive result leads to step 105a, the evaluation in step 107a may confirm that a foreign object is present unless the further action in step 105a indicates that a foreign object is not present by a suitable margin. When a weak negative result leads to step 105b, the evaluation in step 107b may confirm that a foreign object is not present unless the further action in step 105b indicates that a foreign object is present by a suitable margin. In some embodiments, the actions in steps 105a and/or 105b may lead to a more accurate determination than in step 103. Accordingly, the determination in steps 107a and/or 107b may be performed solely based on the information obtained in steps 105a and/or 105b, or based on this information as well as the information considered in steps 101-103.

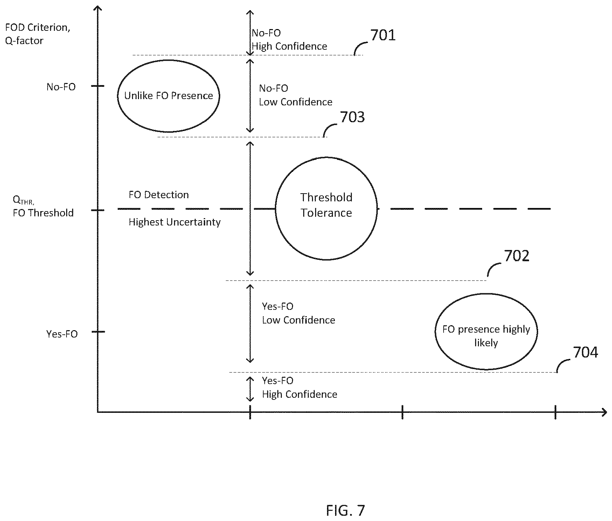

FIG. 7 shows a diagram similar to that of FIG. 3 for two marginal detection results. A first threshold 701 may be used to determine whether a foreign object is absent with high confidence. FOD measurements above this threshold may be determined as a strongly negative indication (an indication that a foreign object is absent). A second threshold 702 may be used to determine whether a foreign object is present with high confidence. FOD measurements below this threshold may be determined as a strongly positive indication (an indication that a foreign object is present). A third threshold 703 separates weakly negative and weakly positive foreign object determinations. The regions between thresholds 701 and 703 and between 702 and 703 indicate weakly negative and weakly positive foreign object determinations, respectively.

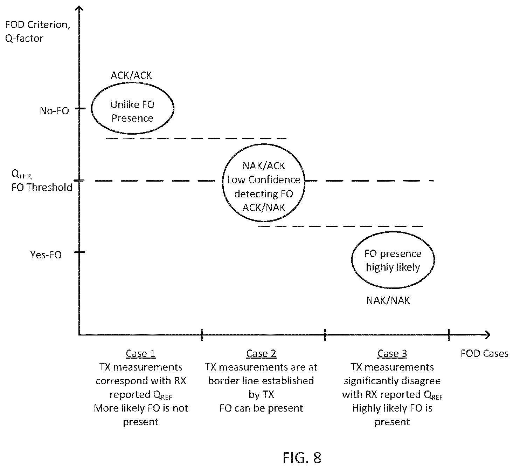

FIG. 8 illustrates a communication technique for communicating from the wireless power transmitter to the wireless power receiver the detection of one of the four FOD states discussed above in connection with FIG. 6 and FIG. 7. The communication of FIG. 8 involves ascribing a secondary meaning to the ACK and NAK messages which were previously used to confirm receipt of messages between the devices. The wireless power transmitter may send a combination of ACK and/or NAK messages to the wireless power receiver depending on which FOD state has been detected by the wireless power transmitter. One example of how this information may be communicated is shown in Table 1, below. As discussed above, the wireless power receiver may send various reference information to the wireless power transmitter. The reference information may be been determined in a calibration process and/or stored in the wireless power receiver. Examples of such information include the wireless power receiver's reference Q-factor Q and reference frequency F . If the wireless power receiver sends both pieces of REF REF information to the wireless power transmitter, it may do so separately. For example, the wireless power receiver may first send the reference Q-factor and then await an acknowledgement from the wireless power receiver. An ACK means that the information was received and an NAK means that the information was not received. Then the wireless power transmitter may send the reference frequency, and the wireless power transmitter may respond with an ACK or a NAK. The inventor has recognized and appreciated that information regarding the FOD detection state can be communicated to the wireless power receiver through ascribing additional meaning to the ACK and NAK messages. As an example, the combination ACK and NAK messages sent in response to the reference Q-factor and reference resonant frequency may encode an FOD state detected by the wireless power transmitter, with one example of an encoding being illustrated in Table 1. Advantageously, such a communication technique may enable the FOD state to be communicated from the wireless power transmitter to the wireless power receiver without adding additional communication overhead, which may allow such information to be communicated using legacy devices. However, it should be appreciated that this is an example, and various types of reference information may be sent to the wireless power transmitter. Further, the encoding scheme shown in FIG. 1 may be modified by changing which FOD state corresponds to the various combination of ACK and NAK responses. When the wireless power receiver is informed of a low-confidence state (#3 or #4) the wireless power receiver may limit power delivery at a level lower than it would be if no foreign object were present.

**Table 1**

| # | **FOD/Q_{REF}** | **FOD/F_{REF}** | **FOD State** |
|---|---|---|---|
| 1 | ACK | ACK | No-FO, High Confidence |
| 2 | NAK | NAK | Yes-FO, High Confidence |
| 3 | NAK | ACK | No-FO, Low Confidence |
| 4 | ACK | NAK | Yes-FO, Low Confidence |

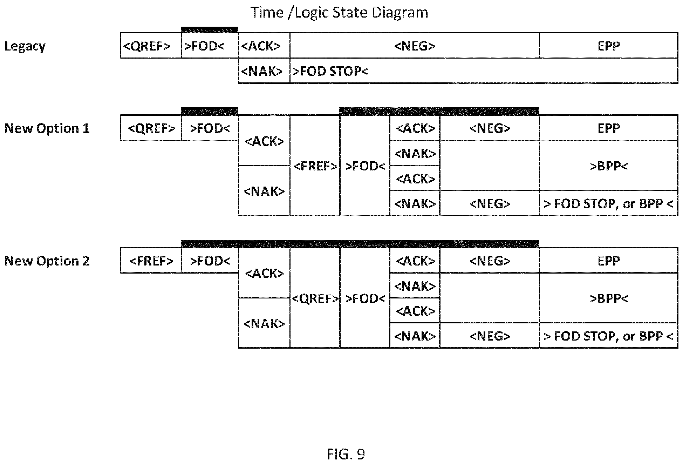

FIG. 9 shows an example of a time / logic-state diagram for the communication technique of FIG. 8, according to some embodiments. A wireless power transmitter response of ACK, ACK may indicate that there is no foreign object, and negotiation should continue. A wireless power transmitter response of ACK, NAK or NAK, ACK indicates that a foreign object may be present. This may indicate the wireless power transmitter is transitioning to a basic power profile (BPP) that allows only limited power delivery and inhibits advanced features. A wireless power transmitter response of NAK, NAK indicates that a foreign object is present and further negotiation may be continued, and wireless power transmitter may be inhibited.

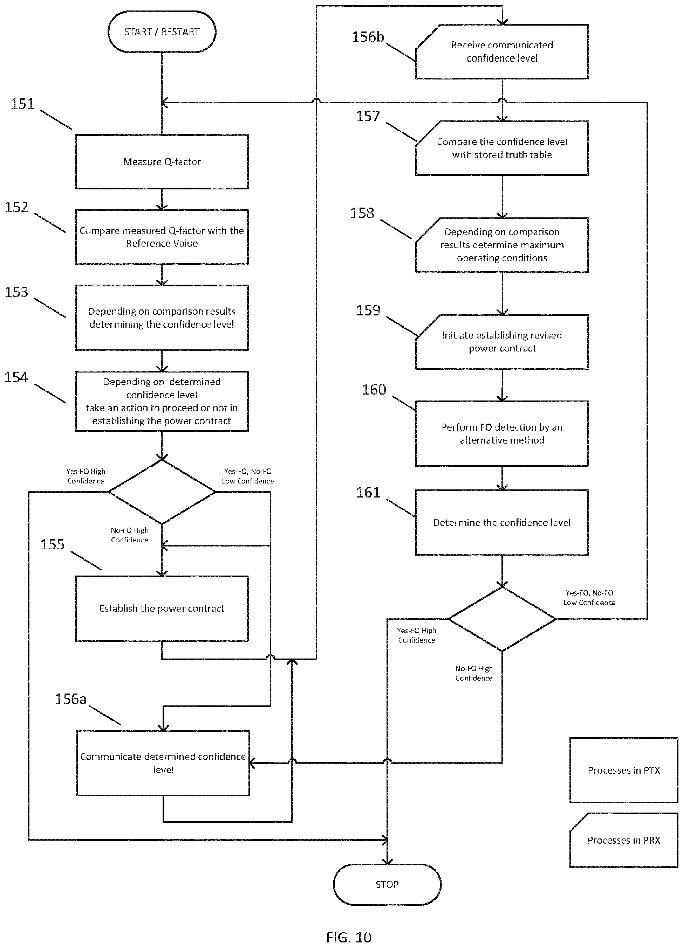

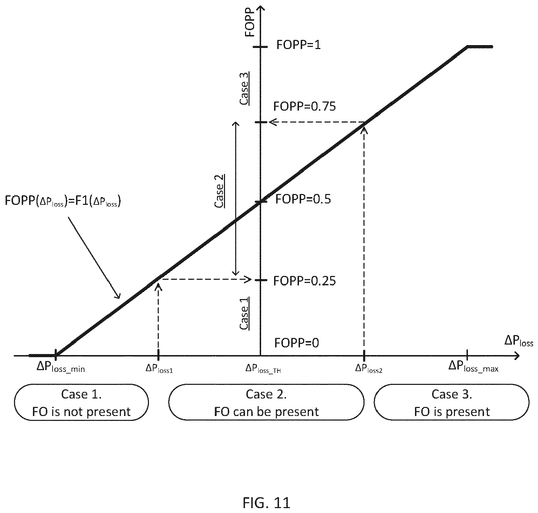

In some embodiments the wireless power receiver may send the reference frequency to the wireless power transmitter prior to sending the Q-factor. An exemplary communication technique and protocol for further action in such a case is as follows.
- ACK after < F > assumes meaning that the wireless power transmitter will REF proceed with EFOD
- NAK after < F > assumes meaning that the wireless power transmitter is REF likely switching to BPP mode, or stop
- ACK after < Q > assumes meaning that the wireless power transmitter will REF continue the negotiation phase
- NAK after < Q > assumes meaning that the wireless power transmitter will REF wait for FOD routine to finish and either stop, or enter BPP mode
- If a single NAK is issued - there is no path to EPP. EPP stands for extended power profile that allows maximum allowable power delivery and other advanced features related to this power profile
FIG. 10 illustrates a method of performing foreign object detection including actions by both the wireless power transmitter and the wireless power receiver, according to some embodiments. In step 151, the wireless power transmitter measures the Q-factor, as an example of step 101 (FIG. 2). In step 152, the Q-factor is compared with the reference value, as an example of step 103 (FIG. 2). In step 153, a confidence level as to whether a foreign object is present may be determined. The confidence level may be a range of continuous values, such as percentages, or a set of discrete states indicating the confidence levels as in FIG. 6-9. The extent to which the Q-factor measurement is above or below a threshold between positive and negative foreign object detection states may be mapped to a confidence level, as will be discussed in connection with FIGS. 11-13. Thresholds may be determined for separating the confidence levels that map into different foreign object detection states. If a foreign object is detected with high confidence in step 154, the method may terminate with a determination that a foreign object is present. If a foreign object is determined to be absent with high confidence in step 154, a power contract negotiation may be initiated in step 155, and the confidence level / FOD state may be sent from the wireless power transmitter to the wireless power receiver in step 156a. The wireless power receiver receives the confidence level / FOD state in step 156b, which is then compared with a level stored in a truth table in step 157 for mapping to a maximum operating condition in step 158. However, it should be appreciated that a truth table need not be used, as the confidence level / FOD state may be mapped to a maximum operating condition in other ways, such as by a calculation using a function or other suitable mapping. In step 159, the wireless power receiver may initiate establishing a revised power contract if the power contract initiated by the wireless power transmitter was for a higher power level than the maximum operating condition established in step 158. In some cases, the maximum operating condition corresponds to a reduced power level. For example, the maximum operating condition may correspond to a power level that is less than 100% and greater than 50% of a prior power level received by the wireless power receiver from the wireless power transmitter before the receiving of the confidence level. In step 160, the wireless power transmitter may perform foreign object detection by a different method if there was sufficiently high uncertainty determined in step 153. For example, if Q-factor is measured in step 151 and a Q-factor determination leads to high uncertainty, step 160 may entail using a power loss measurement to detect whether a foreign object is present. Similarly, if the power loss technique is used in step 151 and leads to high uncertainty, a Q-factor measurement may be made in step 160. In step 161 the confidence level of the foreign object detection in step 160 may be determined. If a foreign object is detected with high confidence, the method may terminate. If there is still low confidence, the method may re-start at step 151. If step 161 results in determining that a foreign object is absent with high confidence, the method may proceed back to step 156. Returning to a description of the result of step 154, if step 154 indicates low confidence, the method may proceed to step 156 and the low confidence level may be communicated to the wireless power receiver.

FIG. 11 shows a plot illustrating a linear relationship between the FOD parameter and confidence level, termed Foreign Object Presence Probability (FOPP). Theoretically, any event probability can be only between zero and 1. A probability of zero means the event never happens. A probability of one means that the event always happens. In some embodiments, a probability of zero and a probability of one are associated with values that a FOD parameter can take. In general, the FOD parameter can be any real, or complex number varying from -∞ to +∞. Different solutions can use different parameters. In FIG. 11, the horizontal axis represents FOD parameter, here power loss in particular, and the vertical axis represents FOPP. A FOPP of 0.5 corresponds to the threshold of power loss for which it is equally likely a foreign object is present as one is not present. FOPP values above 0.5 correspond to a higher likelihood a foreign object is present than 0.5. FOPP values below 0.5 correspond to a lower likelihood a foreign object is present than 0.5. The threshold ΔPloss2 corresponds to a threshold for indicating a foreign object is present with high-confidence (Case 3 in FIG. 3). Loss above this threshold indicates a foreign object is present with high confidence, whereas below this threshold and above FOPP = 0.5 corresponds to a lower confidence level. Similarly, the threshold ΔPloss1 corresponds to a threshold for indicating a foreign object is absent with high-confidence (Case 1 in FIG. 3). Loss below this threshold indicates a foreign object is present with high confidence, whereas above this threshold and below FOPP = 0.5 corresponds to a lower confidence level. Between ΔPloss1 and ΔPloss2 is a region of low confidence, corresponding to Case 2 in FIG. 3. The following relationships may apply.
- the region of ΔPₗₒₛₛ < ΔP_{loss_min},
   ▪ the FOPP=0 - high confidence no-FO;
- the region of ΔP_{loss_min} < ΔP_{loss_}< ΔPₗₒₛₛ₁,
   ▪ FOPP<0.25 - high confidence no-FO;
- the region of ΔPₗₒₛₛ₁ < ΔPₗₒₛₛ < ΔPₗₒₛₛ₂,
   ▪ 0.25<FOPP<0.75 - Low confidence in making correct decision on FO presence;
- the region of ΔPₗₒₛₛ₂ < ΔP_{loss_}< ΔP_{loss_max},
   ▪ 0.75<FOPP<1.0 - high confidence FO is present;
- the region of ΔPₗₒₛₛ, > ΔP_{loss_max},
   ▪ FOPP=0 - high confidence FO is present;

Although power loss has been given as an example, it should be appreciated that the horizontal axis of FIG. 11 may correspond to any suitable foreign object detection parameter such as Q-factor, resonant frequency or a figure of merit calculated based on one or more parameters. The probability levels of 0.25 and 0.75 as margins of foreign object presence or absence are given as an example. The marginal FOPP levels can be chosen by a particular product manufacturer, or by an association or a group of collaborating product manufacturers.

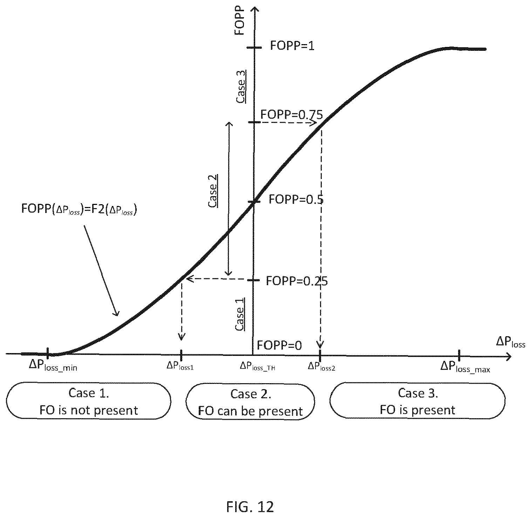

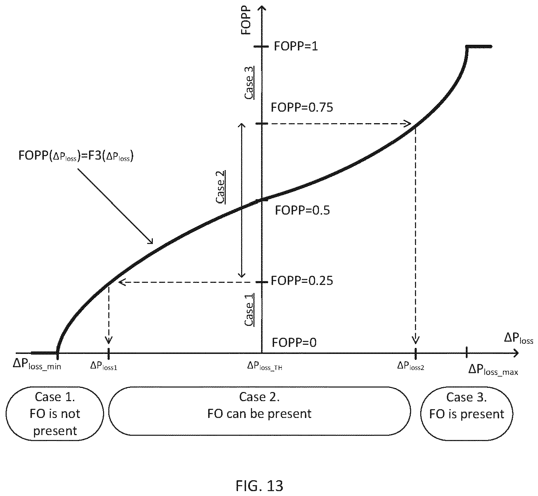

FIG. 12 illustrates a non-linear relationship between the FOD parameter and FOPP. For interoperability, wireless power transmitters may provide linear dependency of FOPP on the threshold quantity, as shown in FIG. 11. In some embodiments wireless power receivers may exhibit a non-linear dependency to better address specifics of particular design. For example, when a wireless power receiver receives a confidence level from the wireless power transmitter in step 156b, the wireless power receiver may use a non-linear relationship in step 157 to determine a FOD state and its corresponding maximum operating condition. FIG. 12 shows that the thresholds ΔPloss1 and ΔPloss2 are closer together than in FIG. 11, which provides a smaller range in which there is a low confidence (Case 2). FIG. 13 shows another non-linear relationship in which the thresholds ΔPloss1 and ΔPloss2 are farther apart than in FIG. 11 and in FIG. 12, which provides a wider range of FO loss in which there is a low confidence (Case 2).

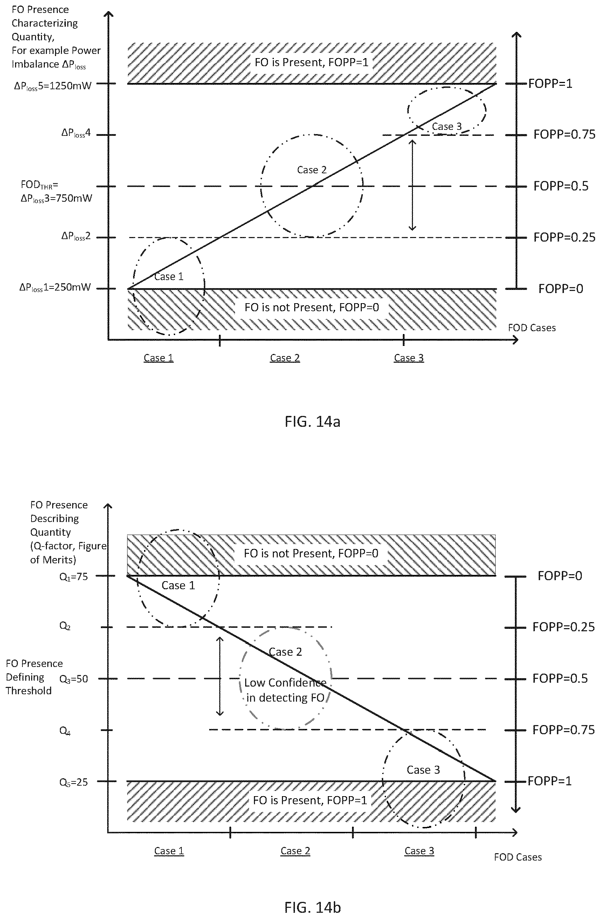

FIGS. 14A and 14B illustrate examples of a linear correlation between Foreign Object Presence Probability (FOPP) and power loss (FIG. 14A), and a linear correlation between FOPP and Q-factor (FIG. 14B).

### Additional Aspects

As discussed above, a wireless power transmitter and receiver may be controlled using controller 5 and 21, respectively, which may be implemented by any suitable type of circuitry. For example, the controllers may be implemented using hardware or a combination of hardware and software. When implemented using software, suitable software code can be executed on any suitable processor (e.g., a microprocessor) or collection of processors. The one or more controllers can be implemented in numerous ways, such as with dedicated hardware, or with general purpose hardware (e.g., one or more processors) that is programmed using microcode or software to perform the functions recited above.

In this respect, it should be appreciated that one implementation of the embodiments described herein comprises at least one computer-readable storage medium (e.g., RAM, ROM, EEPROM, flash memory or other memory technology, or other tangible, non-transitory computer-readable storage medium) encoded with a computer program (i.e., a plurality of executable instructions) that, when executed on one or more processors, performs the above-discussed functions of one or more embodiments. In addition, it should be appreciated that the reference to a computer program which, when executed, performs any of the above-discussed functions, is not limited to an application program running on a host computer. Rather, the terms computer program and software are used herein in a generic sense to reference any type of computer code (e.g., application software, firmware, microcode, or any other form of computer instruction) that can be employed to program one or more processors to implement aspects of the techniques discussed herein.

Various aspects of the apparatus and techniques described herein may be used alone, in combination, or in a variety of arrangements not specifically discussed in the embodiments described in the foregoing description and is therefore not limited in its application to the details and arrangement of components set forth in the foregoing description or illustrated in the drawings. For example, aspects described in one embodiment may be combined in any manner with aspects described in other embodiments.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," or "having," "containing," "involving," and variations thereof herein, is meant to encompass the items listed thereafter and equivalents thereof as well as additional items.

## Claims

1. A method for a wireless power receiver (11) to control power transfer based on a result of foreign object detection, the method being **characterized in that** the method comprises, by the wireless power receiver (11):
receiving, from a wireless power transmitter (1), a confidence level as to whether a foreign object is present, the confidence level being within a predetermined range;
mapping the confidence level to a maximum operating condition;
sending the maximum operating condition to the wireless power transmitter (1); and
receiving power from the wireless power transmitter (1) at or below the maximum operating condition.

2. The method of claim 1, wherein the confidence level indicates a foreign object is present, a foreign object is not present, or a foreign object detection, FOD, measurement is marginal.

3. The method of claim 1 or 2, wherein the confidence level is a first confidence level indicating a weak positive detection of a foreign object or a second confidence level indicating a weak negative detection of a foreign object.

4. The method of claim 3, further comprising receiving the confidence level using one or more messages selected from the group consisting of an ACK and a NAK, wherein ACK means that a information was received and an NAK means that the information was not received.

5. The method of any one of claims 1 to 4, wherein the maximum operating condition corresponds to a maximum power level.

6. The method of any one of claims 1 to 4, wherein the maximum operating condition corresponds to a power level that is less than 100% and greater than 50% of a prior power level received by the wireless power receiver (11) from the wireless power transmitter (1) before the receiving of the confidence level.

7. The method of any one of claims 1 to 6, wherein the wireless power receiver (11) changes its operating mode, power, or voltage in response to the confidence level received from the wireless power transmitter (1).

8. The method of claim 7, wherein the wireless power receiver (11) transitions into a lower operating voltage, or power level, or both in response to a low confidence level received from the wireless power transmitter (1).

9. The method of claim 7 or 8, wherein the wireless power receiver (11) changes its operating mode, power, or voltage in response to the confidence level received from the wireless power transmitter (1) by performing linear or non-linear correlation of the received confidence level to the operating mode, power, or voltage, the correlation being stored by the wireless power receiver (11).

10. A controller for a wireless power receiver (11), the controlled being **characterized by** comprising circuitry configured to:
receive, from a wireless power transmitter (1), a confidence level as to whether a foreign object is present, the confidence level being within a predetermined range;
map the confidence level to a maximum operating condition;
send the maximum operating condition to the wireless power transmitter (1); and
receive power from the wireless power transmitter (1) at or below the maximum operating condition.

11. The controller of claim 10, wherein the maximum operating condition corresponds to a maximum power level.

12. The controller of claim 10 or 11, wherein the maximum operating condition corresponds to a power level that is less than 100% and greater than 50% of a prior power level received by the wireless power receiver (11) from the wireless power transmitter (1) before the wireless power receiver (11) receives the confidence level.

## Patentansprüche

1. Verfahren für einen drahtlose-Leistung-Empfänger (11), um eine Leistungsübertragung basierend auf einem Ergebnis einer Fremdobjekterfassung zu steuern, wobei das Verfahren **dadurch gekennzeichnet ist, dass** das Verfahren umfasst, durch den drahtlose-Leistung-Empfänger (11):
Empfangen, von einem drahtlose-Leistung-Sender (1), eines Vertrauensgrads darüber, ob ein Fremdobjekt vorhanden ist, wobei der Vertrauensgrad innerhalb eines vorbestimmten Bereichs liegt;
Abbilden des Vertrauensgrads auf einen maximalen Betriebszustand;
Senden des maximalen Betriebszustands an den drahtlose-Leistung-Sender (1); und
Empfangen einer Leistung von dem drahtlose-Leistung-Sender (1) bei dem oder unterhalb des maximalen Betriebszustands.

2. Verfahren gemäß Anspruch 1, wobei der Vertrauensgrad anzeigt, dass ein Fremdobjekt vorhanden ist, dass ein Fremdobjekt nicht vorhanden ist oder dass eine Fremdobjekterfassungs-, FOD-, Messung marginal ist.

3. Verfahren gemäß Anspruch 1 oder 2, wobei der Vertrauensgrad ein erster Vertrauensgrad ist, der eine schwache positive Erfassung eines Fremdobjekts anzeigt, oder ein zweiter Vertrauensgrad ist, der eine schwache negative Erfassung eines Fremdobjekts anzeigt.

4. Verfahren gemäß Anspruch 3, weiter umfassend ein Empfangen des Vertrauensgrads unter Verwendung einer oder mehrerer Nachrichten, die aus einer Gruppe ausgewählt werden, die aus einer ACK und einer NAK besteht, wobei eine ACK bedeutet, dass eine Information empfangen wurde, und eine NAK bedeutet, dass die Information nicht empfangen wurde.

5. Verfahren gemäß einem der Ansprüche 1 bis 4, wobei der maximale Betriebszustand zu einem maximalen Leistungspegel korrespondiert.

6. Verfahren gemäß einem der Ansprüche 1 bis 4, wobei der maximale Betriebszustand zu einem Leistungspegel korrespondiert, welcher kleiner als 100 % und größer als 50 % eines vorherigen Leistungspegels ist, der durch den drahtlose-Leistung-Empfänger (11) von dem drahtlose-Leistung-Sender (1) vor dem Empfangen des Vertrauensgrads empfangen wird.

7. Verfahren gemäß einem der Ansprüche 1 bis 6, wobei der drahtlose-Leistung-Empfänger (11) seinen Betriebsmodus, seine Leistung oder seine Spannung als Reaktion auf den von dem drahtlose-Leistung-Sender (1) empfangenen Vertrauensgrad ändert.

8. Verfahren gemäß Anspruch 7, wobei der drahtlose-Leistung-Empfänger (11) als Reaktion auf einen niedrigen von dem drahtlose-Leistung-Sender (1) empfangenen Vertrauensgrad zu einer niedrigeren Betriebsspannung oder einem niedrigeren Leistungspegel oder beiden wechselt.

9. Verfahren gemäß Anspruch 7 oder 8, wobei der drahtlose-Leistung-Empfänger (11) seinen Betriebsmodus, seine Leistung oder seine Spannung als Reaktion auf den von dem drahtlose-Leistung-Sender (1) empfangenen Vertrauensgrad durch Ausführen einer linearen oder nicht-linearen Korrelation des empfangenen Vertrauensgrads zu dem Betriebsmodus, der Leistung oder der Spannung ändert, wobei die Korrelation durch den drahtlose-Leistung-Empfänger (11) gespeichert wird.

10. Steuerung für einen drahtlose-Leistung-Empfänger (11), wobei die Steuerung **dadurch gekennzeichnet ist, dass** sie eine Schaltung aufweist, die eingerichtet ist zum:
Empfangen, von einem drahtlose-Leistung-Sender (1), eines Vertrauensgrads darüber, ob ein Fremdobjekt vorhanden ist, wobei der Vertrauensgrad innerhalb eines vorbestimmten Bereichs liegt;
Abbilden des Vertrauensgrads auf einen maximalen Betriebszustand;
Senden des maximalen Betriebszustands an den drahtlose-Leistung-Sender (1); und
Empfangen einer Leistung von dem drahtlose-Leistung-Sender (1) bei dem oder unterhalb des maximalen Betriebszustands.

11. Steuerung gemäß Anspruch 10, wobei der maximale Betriebszustand zu einem maximalen Leistungspegel korrespondiert.

12. Steuerung gemäß Anspruch 10 oder 11, wobei der maximale Betriebszustand zu einem Leistungspegel korrespondiert, welcher kleiner als 100 % und größer als 50 % eines vorherigen Leistungspegels ist, der durch den drahtlose-Leistung-Empfänger (11) von dem drahtlose-Leistung-Sender (1) empfangen wird, bevor der drahtlose-Leistung-Empfänger (11) den Vertrauensgrad empfängt.

## Revendications

1. Procédé permettant à un récepteur d'énergie sans fil (11) de commander un transfert d'énergie sur la base d'un résultat de détection d'objet étranger, le procédé étant **caractérisé en ce que** le procédé comprend, par le récepteur d'énergie sans fil (11) :
la réception, depuis un émetteur d'énergie sans fil (1), d'un niveau de confiance quant à la présence d'un objet étranger, le niveau de confiance étant dans une plage prédéterminée ;
le mappage du niveau de confiance à une condition de fonctionnement maximale ;
l'envoi de la condition de fonctionnement maximale à l'émetteur d'énergie sans fil (1) ; et
la réception d'énergie depuis l'émetteur d'énergie sans fil (1) à un niveau inférieur ou égal à la condition de fonctionnement maximale.

2. Procédé de la revendication 1, dans lequel le niveau de confiance indique qu'un objet étranger est présent, qu'un objet étranger n'est pas présent, ou qu'une mesure de détection d'objet étranger, FOD, est marginale.

3. Procédé de la revendication 1 ou 2, dans lequel le niveau de confiance est un premier niveau de confiance indiquant une détection positive faible d'un objet étranger ou un second niveau de confiance indiquant une détection négative faible d'un objet étranger.

4. Procédé de la revendication 3, comprenant en outre la réception du niveau de confiance en utilisant un ou plusieurs messages choisis dans le groupe constitué d'un ACK et d'un NAK, dans lequel ACK signifie qu'une information a été reçue et NAK signifie que l'information n'a pas été reçue.

5. Procédé de l'une quelconque des revendications 1 à 4, dans lequel la condition de fonctionnement maximale correspond à un niveau d'énergie maximal.

6. Procédé de l'une quelconque des revendications 1 à 4, dans lequel la condition de fonctionnement maximale correspond à un niveau d'énergie qui est inférieur à 100% et supérieur à 50% d'un niveau d'énergie précédent reçu par le récepteur d'énergie sans fil (11) depuis l'émetteur d'énergie sans fil (1) avant la réception du niveau de confiance.

7. Procédé de l'une quelconque des revendications 1 à 6, dans lequel le récepteur d'énergie sans fil (11) change son mode de fonctionnement, son énergie ou sa tension en réponse au niveau de confiance reçu depuis l'émetteur d'énergie sans fil (1).

8. Procédé de la revendication 7, dans lequel le récepteur d'énergie sans fil (11) passe à une tension de fonctionnement inférieure ou à un niveau d'énergie inférieur, ou aux deux, en réponse à un faible niveau de confiance reçu depuis l'émetteur d'énergie sans fil (1).

9. Procédé de la revendication 7 ou 8, dans lequel le récepteur d'énergie sans fil (11) change son mode de fonctionnement, son énergie ou sa tension en réponse au niveau de confiance reçu depuis l'émetteur d'énergie sans fil (1) en effectuant une corrélation linéaire ou non linéaire du niveau de confiance reçu au mode de fonctionnement, à l'énergie ou à la tension, la corrélation étant stockée par le récepteur d'énergie sans fil (11).

10. Unité de commande pour un récepteur d'énergie sans fil (11), l'unité de commande étant **caractérisée en ce qu'**elle comprend un ensemble de circuits configuré pour :
recevoir, depuis un émetteur d'énergie sans fil (1), un niveau de confiance quant à la présence d'un objet étranger, le niveau de confiance étant dans une plage prédéterminée ;
mapper le niveau de confiance à une condition de fonctionnement maximale ;
envoyer la condition de fonctionnement maximale à l'émetteur d'énergie sans fil (1) ; et
recevoir l'énergie depuis l'émetteur d'énergie sans fil (1) à un niveau inférieur ou égal à la condition de fonctionnement maximale.

11. Unité de commande de la revendication 10, dans laquelle la condition de fonctionnement maximale correspond à un niveau d'énergie maximal.

12. Unité de commande de la revendication 10 ou 11, dans laquelle la condition de fonctionnement maximale correspond à un niveau d'énergie qui est inférieur à 100% et supérieur à 50% d'un niveau d'énergie précédent reçu par le récepteur d'énergie sans fil (11) depuis l'émetteur d'énergie sans fil (1) avant que le récepteur d'énergie sans fil (11) ne reçoive le niveau de confiance.
